# EUROPÄISCHE PATENTSCHRIFT

(11) **EP 3 538 967 B1**
(45) Veröffentlichungstag und Bekanntmachung des Hinweises auf die Patenterteilung: **16.03.2022**
(21) Anmeldenummer: 17793648.1
(22) Anmeldetag: 02.11.2017
(51) Int. Cl.: G05D 1/02

(54) **VERFAHREN UND VORRICHTUNG ZUM BETRIEB EINES SICH SELBSTTÄTIG FORTBEWEGENDEN ROBOTERS**
METHOD AND SYSTEM FOR OPERATING AN AUTOMATICALLY MOVING ROBOT
PROCÉDÉ ET DISPOSITIF DE FONCTIONNEMENT D'UN ROBOT SE DÉPLAÇANT DE FAÇON AUTONOME

(30) Priorität: 08.11.2016 DE 102016121320
(43) Veröffentlichungstag der Anmeldung: 18.09.2019
(73) Patentinhaber: Vorwerk & Co. Interholding GmbH, 42275 Wuppertal (DE)
(72) Erfinder: HILLEN, Lorenz, 42287 Wuppertal (DE)
(74) Vertreter: Müller, Enno
(86) Internationale Anmeldenummer: PCT/EP2017/078056
(87) Internationale Veröffentlichungsnummer: WO 2018/086979

(56) Entgegenhaltungen:
- EP-A1- 2 769 809
- US-A1- 2007 262 884
- US-A1- 2009 093 907
- US-A1- 2012 083 923

## Beschreibung

### Gebiet der Technik

Die Erfindung betrifft ein Verfahren zum Betrieb eines sich selbsttätig fortbewegenden Roboters, wobei eine Karte einer Umgebung des Roboters anhand von innerhalb der Umgebung aufgenommenen Messdaten erstellt wird, wobei anhand der erstellten Karte, einer aktuellen Position des Roboters innerhalb der Umgebung und einer determinierten Verhaltensweise, nämlich Verfahrstrategie, des Roboters ein Steuerbefehl generiert wird, wobei sich der Roboter anhand des generierten Steuerbefehls fortbewegt, und wobei für eine Navigation des Roboters relevante Daten zumindest teilweise zur Verarbeitung an eine externe Recheneinrichtung übermittelt werden.

Des Weiteren betrifft die Erfindung ein System aus einem sich selbsttätig fortbewegenden Roboter, einer mit dem Roboter in Kommunikationsverbindung stehenden externen Recheneinrichtung und mindestens einem Sensor zur Aufnahme von Messdaten innerhalb einer Umgebung des Roboters, wobei der Roboter eine Einrichtung zur Navigation des Roboters innerhalb der Umgebung aufweist, wobei die externe Recheneinrichtung eingerichtet ist, für eine Navigation des Roboters relevante Daten zu verarbeiten.

### Stand der Technik

Verfahren zur Kartierung und Selbstlokalisierung von Robotern sind im Stand der Technik bekannt.

Die Veröffentlichungen DE 10 2011 000 536 A1 und DE 10 2008 014 912 A1 zeigen derartige Verfahren beispielsweise im Zusammenhang mit selbsttätig verfahrbaren Saug- und/ oder Reinigungsrobotern zur Abreinigung von Fußböden. Darüber hinaus können diese Verfahren jedoch auch Anwendung bei selbsttätig verfahrbaren Transportrobotern, Rasenmährobotern oder dergleichen finden. Derartige Roboter sind bevorzugt mit Abstandssensoren ausgestattet, um so beispielsweise eine Kollision mit einem in einem Verfahrweg stehenden Hindernis oder dergleichen zu vermeiden. Die Sensoren arbeiten bevorzugt berührungslos, beispielsweise mit Hilfe von Licht- und/oder Ultraschall. Es ist des Weiteren bekannt, den Roboter mit Mitteln zur Rundum-Abstandsmessung zu versehen, beispielsweise in Form eines optischen Triangulationssystems, welches auf einer um eine Vertikalachse rotierenden Plattform oder dergleichen angeordnet ist. Mittels eines solchen Systems können Rundum-Abstandsmessungen zur Orientierung des Roboters innerhalb beispielsweise eines Raumes vorgenommen werden, weiter insbesondere im Zuge einer selbsttätig ausgeführten Tätigkeit des Roboters sowie weiter bevorzugt zum Anlegen einer Karte des befahrenen Raumes.

Die erfassten Messwerte, insbesondere Raumbegrenzungen und/oder Hindernisse, werden mittels eines Onboard-Computers des Roboters zu einer Karte verarbeitet und insbesondere in einem nicht flüchtigen Speicher des Roboters gespeichert, so dass im Zuge eines Reinigungs- oder Transportvorganges auf diese Karte zum Zwecke der Orientierung zurückgegriffen werden kann. Weiter ist diesbezüglich bekannt, anhand der Karte und mittels hinterlegter Algorithmen eine günstige Verhaltensweise, insbesondere Verfahrstrategie, des Roboters zu ermitteln, beispielsweise bei Erkennung eines im Verfahrweg des Roboters liegenden Gegenstandes.

Darüber hinaus ist es im Stand der Technik bekannt, die Erstellung der Karte nicht in einem Speicher des Roboters durchzuführen, sondern innerhalb einer externen Recheneinrichtung, welche in Kommunikationsverbindung mit dem Roboter steht. Die Druckschrift EP 2 769 809 A1 offenbart beispielsweise ein Verfahren zum Betrieb eines mobilen Roboters, bei welchem ein Sensor Sensordaten an eine Cloud übermittelt, welche diese dann zu einer Karte verarbeitet. Die erstellte Karte wird dann zurück an den mobilen Roboter übermittelt und von diesem zur Navigation des Roboters innerhalb der Umgebung verwendel . Die US 2009/093907 A1 geht darüber noch hinaus, indem sie vorschlägt, nicht nur die Kartenerstellung sondern auch die Verhaltensbestimmung und die Steuerbefehlsgenerierung durch eine externe Recheneinrichtung vornehmen zu lassen.

### Zusammenfassung der Erfindung

Ausgehend von dem vorgenannten Stand der Technik ist es Aufgabe der Erfindung, ein vorgenanntes Verfahren derart weiterzubilden, dass der Onboard-Computer des Roboters weiter entlastet wird, insbesondere hinsichtlich Rechenkapazität, Speicherkapazität und/ oder Stromaufnahme.

Zur Lösung der vorgenannten Aufgabe schlägt die Erfindung vor, dass die externe Recheneinrichtung basierend auf der Karte und der aktuellen Position des Roboters die gewünschte Verhaltensweise des Roboters als Grundlage für den Steuerbefehl determiniert, wobei eine Verhaltensdeterminationseinrichtung entscheidet, wann ein Zustand des Roboters und/ oder ein aktuell von dem Roboter gezeigtes Verhalten geändert werden muss, wobei die Verhaltensdeterminationseinrichtung auf die Karte zugreift und aus einer aktuellen Verfahrsituation des Roboters, nämlich in Abhängigkeit von der Position des Roboters und einem in dem Verfahrweg vorhandenen Hindernis, eine Verhaltensweise des Roboters, welche zu einer gewünschten Vermeidung des Hindernisses führt, determiniert, und wobei die externe Recheneinrichtung eine Information über die determinierte Verhaltensweise an den Roboter übermittelt und der Roboter anhand der determinierten Verhaltensweise einen Steuerbefehl generiert, der zur Ansteuerung eines Motors des Roboters in der Art dient, dass der Roboter das Hindernis vermeidet.

Durch die Erfindung wird somit ein besonders rechenintensiver Bestandteil der Roboternavigation, nämlich die Determinierung einer gewünschten Verhaltensweise des Roboters anhand der erstellten Karte, in eine externe Recheneinrichtung ausgelagert, um den Onboard-Computer des Roboters zu entlasten. Die Determinierung der gewünschten Verhaltensweise betrifft ein vorteilhaftes Verhalten während der Navigation des Roboters innerhalb der Umgebung, insbesondere Planungs- und Verhaltensentscheidungen, die beispielsweise eine Verfahrstrategie des Roboters beeinflussen. Im Zuge der Determinierung der Verhaltensweise des Roboters verwaltet die externe Recheneinrichtung einen Zustand des Roboters, beispielsweise den Zustand "Reinigend", "Ruhend" oder dergleichen. Diese Verwaltung erfolgt mittels einer Verhaltensdeterminationseinrichtung, welche neben der Verwaltung des Zustandes des Weiteren auf Umwelteinflüsse, wie beispielsweise Hindernisse innerhalb der Umgebung und/ oder Benutzereingaben, reagiert. Die Verhaltensdeterminationseinrichtung entscheidet aufgrund dieser Parameter, wann der Zustand und/oder ein aktuell von dem Roboter gezeigtes Verhalten geändert werden muss, beispielsweise eine Reinigung beendet werden muss, der Roboter eine Basisstation anfahren muss, einem Hindernis ausgewichen werden muss und dergleichen. Darüber hinaus determiniert die Verhaltensdeterminationseinrichtung als gewünschte Verhaltensweise des Roboters beispielsweise vorausplanende Aktionen, die beinhalten, wo und in welcher Ausrichtung gereinigt werden soll, wie eine Umgebung vollständig mit einem Verfahrweg abgedeckt werden kann und dergleichen. Typischerweise macht die Verhaltensdeterminationseinrichtung dabei Gebrauch von bekannten Verhaltensarchitekturen und Fahrt- bzw. Handlungsplanungsalgorithmen.

Die Berechnungstätigkeit der Verhaltensdeterminationseinrichtung ist dabei in einen Verfahrensablauf eingebunden, welcher beispielsweise und insbesondere eine Sensordatenaufbereitung, eine Kartierung, ein Generieren von Fahrbefehlen und gegebenenfalls eine Kartenaufbereitung beinhaltet. Dabei schließt sich die Determinierung der Verhaltensweise vorzugsweise an den Verfahrensschritt einer Kartierung an und erfolgt zeitlich vor einem Generieren eines Steuerbefehls.

Im Einzelnen beinhaltet das Verfahren zur Kartierung und Navigation zunächst die Aufnahme von Messdaten innerhalb der Umgebung des Roboters. Die Messdaten werden dann zu einer Karte der Umgebung des Roboters fusioniert. In der Regel ist dies ein Optimierungs- oder Schätzungsprozess, der für die gemessenen Messdaten, nämlich einerseits aktuell neu aufgenommene als auch bereits bekannte Messdaten, die wahrscheinlichste Karte ermittelt. Aus dieser Karte können die aktuelle Position sowie frühere Positionen des Roboters abgeleitet werden. Üblicherweise werden zum Aufbau der Karte und zur Positionsschätzung Odometriedaten und Abstandsmessdaten fusioniert. Derartige Verfahren gehören zu der Klasse der sogenannten SLAM-Algorithmen (Simultaneous Localisation and Mapping). Messdaten, die aktuell nicht zum Aufbau der Karte benötigt werden, beispielsweise zusätzliche Messdaten eines Kontaktsensors oder dergleichen, können mit Hilfe eines gespeicherten Zeitstempels in der Karte vermerkt werden, so dass bei nachfolgenden Berechnungen bei Bedarf auf die vorhandenen Messdaten zugegriffen werden kann.

Aufbauend auf die erstellte Karte werden anschließend Planungs- und Entscheidungsalgorithmen verwendet, um eine gewünschte Verhaltensweise des Roboters zu determinieren. Die determinierte Verhaltensweise dient dann wiederum als Grundlage zur Generierung eines Steuerbefehls, beispielsweise zur Ansteuerung eines Motors des Roboters. Sofern beispielsweise eine gewünschte Verhaltensweise des Roboters determiniert wird, die anstatt einer Reinigung nun beispielsweise eine Hindernisvermeidung vorsieht, so muss ein Steuerbefehl generiert werden, der eine Geradeausfahrt des Roboters in beispielsweise eine Kurvenfahrt ändert. Für Roboter mit beispielsweise einem differentiellen Antrieb bedeutet dies, dass der Steuerbefehl die Antriebsmotoren nun nicht mehr mit gleicher Geschwindigkeit ansteuert, sondern mit unterschiedlicher Geschwindigkeit, so dass der Roboter eine Kurve fährt.

Die erstellte Karte kann schließlich noch zur Darstellung für einen Nutzer aufbereitet werden, so dass gewährleistet ist, dass sich der Nutzer leicht in der Karte zurechtfinden kann und seine Wohnfläche oder Teile von Räumen und/ oder Bereichen darin schnell wiedererkennt. Die ursprünglich erstellte Karte kann dabei durch geeignete Filterung, zum Beispiel Erkennen von geraden Segmenten, Eliminierung von Ausreißern, Non-Maximum Suppression und dergleichen angepasst werden.

Im Unterschied zu klassischen, autonomen mobilen Robotern werden gemäß der Erfindung nicht alle für die Navigation durchzuführenden Berechnungen auf dem Onboard-Computer des Roboters ausgeführt. Insbesondere nicht die rechenintensive Determinierung einer gewünschten Verhaltensweise des Roboters auf der Basis der erstellten Karte. Die Ergebnisse der Determinierung werden dem Roboter vielmehr durch die externe Recheneinrichtung zur Verfügung gestellt, wobei der Roboter daraufhin in gewohnter Art und Weise seine Arbeitstätigkeit ausführen kann. Durch die Auslagerung von Berechnungen auf die externe Recheneinrichtung ergeben sich Vorteile in Bezug auf die Auslastung der Rechenleistung und des Speichers des Onboard-Computers des Roboters. Zudem erfolgt vorteilhaft eine Zentralisierung der Navigationssoftware. Bei klassischen, autonomen mobilen Robotern ist jeder Roboter mit einer Kopie der Navigationssoftware ausgestattet. Auch wenn Roboter üblicherweise updatefähig sind, braucht es doch einige Zeit, bis ein Nutzer auf das Update aufmerksam wird und es installiert. Darüber hinaus ist davon auszugehen, dass nicht alle Nutzer überhaupt ein Update einspielen, so dass nach längerer Zeit eine sehr heterogene Verteilung der Softwareversionen auf den benutzten Robotern existiert, welche dem Hersteller des Roboters einen Service für den jeweiligen Roboter erschwert. Mit der Erfindung können nun auch wesentliche Teile der Navigationssoftware zentral in der externen Recheneinrichtung ausgeführt werden, so dass alle Roboter immer mit dem gleichen Versionsstand der Navigationssoftware arbeiten. Sobald ein Softwareupdate verfügbar ist, wird die vorherige Softwareversion automatisch ersetzt, ohne dass der Nutzer dafür Vorkehrungen treffen muss. Die Zentralisierung der Navigationssoftware in der externen Recheneinrichtung ermöglicht es auch, die Hardware, auf der die Software ausgeführt wird, nach Auslieferung des Roboters zu ändern, so dass beispielsweise nachträglich Software-Merkmale freigeschaltet werden können, die mit der ursprünglich ausgewählten Hardware nicht hätten ausgeführt werden können.

Bei dem vorgeschlagenen Verfahren kann der Roboter nun mit einem relativ leistungsschwachen Onboard-Computer, zum Beispiel einem Micro-Controller zur Sensordatenauswertung und zur Ansteuerung von Motoren, ausgestattet werden, welcher während einer Fortbewegung des Roboters gleichmäßig ausgelastet ist. Für die auf die externe Recheneinrichtung ausgelagerten Berechnungen teilt sich der Roboter die von der externen Recheneinrichtung zur Verfügung gestellte Rechenleistung und Speicherkapazität mit anderen Robotern, die ebenfalls gerade aktiv sind. Im Rahmen der auf der externen Recheneinrichtung zur Verfügung stehenden Ressourcen kann jeder Roboter dabei die Ressourcen anfordern, die er beispielsweise in Abhängigkeit von einer aktuellen Arbeitsaufgabe oder einer Umgebung, innerhalb welcher er navigiert, benötigt. Die für alle Roboter verfügbaren Ressourcen der externen Recheneinrichtung lassen sich an Stoßzeiten mit besonders vielen oder besonders wenigen aktiven Robotern anpassen. Dadurch ergibt sich eine gleichmäßige Auslastung der eingesetzten Ressourcen in Bezug auf Rechenleistung und Speicher. Des Weiteren kann es vorgesehen sein, dass mehrere Roboter auf der externen Recheneinrichtung auch untereinander Informationen derart austauschen, dass ein erster Roboter beispielsweise auf eine Karte oder Navigationsdaten eines zweiten Roboters zugreifen kann.

Des Weiteren wird vorgeschlagen, dass die externe Recheneinrichtung die Karte der Umgebung erstellt. Gemäß dieser Ausgestaltung erfolgt nicht nur die Determinierung der Verhaltensweise des Roboters in der externen Recheneinrichtung, sondern auch der vorhergehende Arbeitsschritt der Kartenerstellung. Somit kann die auf dem Roboter benötigte lokale Rechen- und Speicherkapazität weiter reduziert werden. Alternativ ist es jedoch nach wie vor auch möglich, dass die Karte mittels des Onboard-Computers des Roboters erstellt und dann an die externe Recheneinrichtung übermittelt wird.

Des Weiteren kann vorgesehen sein, dass der Roboter Messdaten der Umgebung mithilfe zumindest eines Sensors aufnimmt und diese Messdaten zur Erstellung der Karte an die externe Recheneinrichtung übermittelt. Der Roboter verfügt somit über einen oder mehrere Sensoren, welche die Umgebung des Roboters vermessen und die aufgenommenen Messdaten dann der externen Recheneinrichtung zur Erstellung der Karte zur Verfügung stellen. Alternativ wäre es auch möglich, dass die Sensoren örtlich nicht dem Roboter zuzurechnen sind, sondern externe Sensoren darstellen, die beispielsweise ortsfest innerhalb der Umgebung angeordnet sind. Dies kann beispielsweise eine Kamera sein, die an einer Wand eines Raumes angeordnet ist und Bilder von der Umgebung mit dem darin befindlichen Roboter aufnimmt. Der Sensor muss dabei auch nicht ortsfest innerhalb des Raumes angeordnet sein, sondern kann sich innerhalb des Raumes bewegen, so dass eine Messung aus unterschiedlichen Perspektiven möglich ist, ebenso wie dies auch möglich ist, wenn der Sensor an dem Roboter selbst angeordnet ist. Bei einer vorzugsweisen Ausgestaltung, bei welcher der Sensor ortsfest mit dem Roboter verbunden ist, können die Messdaten vorzugsweise mittels Odometrie, Abstandsmessung, insbesondere Laserentfernungsmessung, Kontaktmessung, und/ oder mittels Drop-Sensoren und/ oder Magnetsensoren aufgenommen werden, und/ oder kann eine Auswertung eines Zustandes einer Antriebseinheit des Roboters erfolgen. Darüber hinaus sind auch noch andere Sensoren des Roboters denkbar, beispielsweise Temperatursensoren, Feuchtigkeitssensoren, Luftgütesensoren, Kameras, Rauchmelder und dergleichen, welche gegebenenfalls einen Hinweis auf eine aktuelle Position innerhalb einer Umgebung geben können. Neben dieser physikalischen Aufnahme von Messdaten können Messdaten auch durch Kombination bestimmter Merkmale, Messwerte oder Zustände von physikalischen Sensoren aufgenommen werden. Dabei erfolgt die Aufnahme von Messdaten beispielsweise mittels sogenannter virtueller Sensoren, welche durch die Software bereitgestellt werden. Ein Beispiel ist dafür ein Schlupfsensor, der Odometrie- und Abstandsmessdaten in der Art miteinander kombiniert, dass bestimmte Und/Oder-Verknüpfungen gebildet werden, die entweder auf einen Schlupf hindeuten oder nicht. Sofern sich beispielsweise die Antriebsräder des Roboters drehen, ohne dass sich der Roboter fortbewegt, so kann darauf geschlossen werden, dass an der aktuellen Position des Roboters ein Schlupf auftritt.

Des Weiteren wird vorgeschlagen, dass Messdaten der Umgebung an die externe Recheneinrichtung übermittelt werden, und die externe Recheneinrichtung die übermittelten Messdaten auf Vollständigkeit und/oder Plausibilität prüft und/ oder in ein zur Erstellung der Karte geeignetes Format wandelt. Damit wird zum Beispiel sichergestellt, dass die Messdaten aller verfügbaren Sensoren ausgelesen werden und/oder fehlerfrei sind. Des Weiteren können beispielsweise Analog-Digital-Wandlungen und/oder Wertebereichsanpassungen erfolgen. Des Weiteren können die Messdaten mit Zeitstempeln versehen werden, damit diese später bei der Kartenerstellung zur Verfügung stehen. Teile dieser Sensordatenaufbereitung können dabei auch auf dem Onboard-Computer des Roboters durchgeführt werden.

Zudem wird vorgeschlagen, dass die navigationsrelevanten Daten auf einem Cloudserver und/ oder einem mobilen Kommunikationsgerät und/ oder einem über ein WLAN mit dem Roboter verbundenen Gerät und/ oder einem WLAN-Router als externer Recheneinrichtung verarbeitet werden. Die Determinierung der Verhaltensweise des Roboters und gegebenenfalls auch die Erstellung der Karte und/ oder eine Sensordatenaufbereitung können somit neben Cloudservern beispielsweise auch auf einem Mobilgerät, wie beispielsweise einem Mobiltelefon, einem Laptop, einem Tablet-Computer oder dergleichen durchgeführt werden. Dabei kann ein Nutzer des Roboters auch auf diesem Mobilgerät eine Benutzereingabe durchführen. Somit kommt dem Mobilgerät eine Mehrzahl von Funktionen zu. Des Weiteren können die Berechnungen auch auf einem über ein WLAN mit dem Roboter verbundenen Gerät durchgeführt werden. Ein solches Gerät kann beispielsweise ebenfalls ein Roboter sein, der gerade nicht für eine Arbeitstätigkeit verwendet wird, ein in das WLAN eingebundener PC, ein sonstiges Haushaltsgerät oder dergleichen. Auch ein WLAN-Router oder ein Smarthome-Server kann zur Ausführung der Berechnungen dienen, wenn die Navigationssoftware auf diesen Geräten ausführbar ist, zum Beispiel in der Form eines Plug-ins. Die Datenübertragung von dem Roboter zu der externen Recheneinrichtung und von der externen Recheneinrichtung zu dem Roboter, bzw. die Datenübertragung von Sensoren zu der externen Recheneinrichtung kann mit Methoden der kabellosen Datenübertragung erfolgen, wie beispielsweise WLAN, Bluetooth, NFC, ZigBee, Mobilfunk und dergleichen. Die übermittelten Daten können auch durch einen Cloudserver übermittelt werden, dessen Funktion die Vermittlung von Nachrichten, nicht jedoch die Ausführung von Berechnungen, ist.

Das Verfahren kann des Weiteren beinhalten, dass die externe Recheneinrichtung eine Information über die determinierte Verhaltensweise an den Roboter übermittelt und der Roboter anhand der determinierten Verhaltensweise einen Steuerbefehl generiert. Gemäß dieser Ausführungsform erfolgt die Generierung von Steuerbefehlen somit innerhalb des Roboters, d. h. mittels des Onboard-Computers des Roboters.

Gemäß einer alternativen Ausführungsform kann vorgesehen sein, dass die externe Recheneinrichtung anhand der determinierten Verhaltensweise einen Steuerbefehl generiert und diesen an den Roboter übermittelt. Dabei erfolgt sowohl die Berechnung der determinierten Verhaltensweise, als auch die Generierung des Steuerbefehls mittels der externen Recheneinrichtung, wobei der generierte Steuerbefehl dann an den Roboter übermittelt wird und direkt zur Steuerung beispielsweise einer Antriebseinheit des Roboters zur Verfügung steht, ohne dass weitere Berechnungen innerhalb des Roboters erfolgen müssen.

Schließlich wird vorgeschlagen, dass ein Nutzer des Roboters eine Eingabe für die externe Recheneinrichtung mittels einer mit der externen Recheneinrichtung in Kommunikationsverbindung stehenden Eingabeeinrichtung, insbesondere mittels eines mobilen Kommunikationsgerätes, tätigt. Die Eingabeeinrichtung kann dabei ein Mobiltelefon, ein Tablet-Computer, ein Laptop oder dergleichen sein, oder unter anderem auch ein Benutzerinterface des Roboters selbst. Darüber hinaus kann auch an der externen Recheneinrichtung selbst, insbesondere ortsfest, eine Eingabeeinrichtung vorgesehen sein, insbesondere dann, wenn es sich bei der externen Recheneinrichtung selbst um ein mobiles Kommunikationsgerät, einen PC oder dergleichen handelt, welches bzw. welcher somit einerseits als externe Recheneinrichtung und andererseits als Eingabeeinrichtung dient. Auch wenn ein Roboter grundsätzlich ohne Eingabeeinrichtung auskommt, so weist dieser dennoch üblicherweise ein Modul zur Benutzerinteraktion auf. Ein solches Modul ist dafür verantwortlich, Benutzereingaben entgegenzunehmen und sie beispielsweise an eine Verhaltensdeterminationseinrichtung weiterzuleiten, bzw. Feedback oder Statusinformationen von der Verhaltensdeterminationseinrichtung an einen Nutzer des Roboters auszugeben. Die Ausgestaltung einer solchen Eingabeeinrichtung ist auf unterschiedliche Weise möglich, beispielsweise in Form eines Displays, eines Knopfes, einer Empfangseinheit zum Empfangen und zur Verarbeitung von Kommandos einer Fernbedienung, beispielsweise mittels Infrarot-Übermittlung, in Form einer App, die auf dem Roboter und/ oder auf dem Roboter und einer zusätzlichen Kommunikationsschnittstelle einer externen Recheneinrichtung ausgeführt wird, und dergleichen.

Neben dem zuvor beschriebenen Verfahren zum Betrieb eines sich selbsttätig fortbewegenden Roboters wird mit der Erfindung ebenso auch ein System aus einem sich selbsttätig fortbewegenden Roboter, einer mit dem Roboter in Kommunikationsverbindung stehenden externen Recheneinrichtung und mindestens einem Sensor zur Aufnahme von Messdaten innerhalb einer Umgebung des Roboters vorgeschlagen, wobei der Roboter eine Einrichtung zur Navigation des Roboters innerhalb der Umgebung aufweist, wobei die externe Recheneinrichtung eingerichtet ist, für eine Navigation des Roboters relevante Daten zu verarbeiten, wobei die externe Recheneinrichtung eine Verhaltensdeterminationseinrichtung aufweist, welche eingerichtet ist, anhand einer erstellten Karte der Umgebung und einer aktuellen Position des Roboters eine Verhaltensweise, nämlich Verfahrstrategie, des Roboters als Grundlage für einen Steuerbefehl zur Steuerung des Roboters zu determinieren, wobei die Verhaltensdeterminationseinrichtung entscheidet, wann ein Zustand des Roboters und/ oder ein aktuell von dem Roboter gezeigtes Verhalten geändert werden muss, wobei die Verhaltensdeterminationseinrichtung auf die Karte zugreift und aus einer aktuellen Verfahrsituation des Roboters, nämlich in Abhängigkeit von der Position des Roboters und einem in dem Verfahrweg vorhandenen Hindernis, eine Verhaltensweise des Roboters, welche zu einer gewünschten Vermeidung des Hindernisses führt, determiniert, und wobei die externe Recheneinrichtung eingerichtet ist, eine Information über die determinierte Verhaltensweise an den Roboter zu übermitteln, wobei der Roboter eingerichtet ist, anhand der determinierten Verhaltensweise einen Steuerbefehl zu generieren, der zur Ansteuerung eines Motors des Roboters in der Art dient, dass der Roboter das Hindernis vermeidet.

Erfindungsgemäß weist die externe Recheneinrichtung nun eine Verhaltensdeterminationseinrichtung zur Bestimmung einer Verhaltensweise des Roboters auf, welche Verhaltensweise dann wiederum als Grundlage zur Generierung eines Steuerbefehls dient. Die gewünschte Verhaltensweise wird mittels der Verhaltensdeterminationseinrichtung auf der Grundlage der erstellten Karte und der aktuellen Position des Roboters ermittelt. Im Übrigen können der Roboter und/oder die externe Recheneinrichtung auch so ausgestaltet sein, dass diese zur Durchführung eines Verfahrens nach einem der vorhergehenden Ansprüche geeignet sind. Dies betrifft insbesondere die Aufteilung von Einrichtungen zur Sensordatenaufbereitung, Kartenerstellung, Kartenaufbereitung und/ oder zur Nutzereingabe auf den Roboter bzw. die externe Recheneinrichtung.

Im Sinne eines sich selbsttätig fortbewegenden Roboters ist gemäß der Erfindung grundsätzlich jegliche Art von Roboter gemeint, die sich selbsttätig innerhalb einer Umgebung orientieren und fortbewegen kann und dabei Arbeitstätigkeiten ausführt. Insbesondere ist hier jedoch an Reinigungsroboter gedacht, welche beispielsweise eine Saug- und/oder Wischaufgabe ausführen, einen Rasen mähen, einen Zustand einer Umgebung überwachen, beispielsweise im Sinne eines Rauch- und/ oder Einbruchsmelders, oder dergleichen.

### Kurze Beschreibung der Zeichnungen

Im Folgenden wird die Erfindung anhand von Ausführungsbeispielen näher erläutert. Es zeigen:
- Fig. 1: einen Roboter in einer perspektivischen Ansicht von außen,
- Fig. 2: einen mit einer externen Recheneinrichtung in Kommunikationsverbindung stehenden Roboter, während einer Fahrt innerhalb einer Umgebung,
- Fig. 3: ein System aus einem Roboter und einer externen Recheneinrichtung gemäß einer ersten Ausführungsform,
- Fig. 4: ein System aus einem Roboter und einer externen Recheneinrichtung gemäß einer zweiten Ausführungsform,
- Fig. 5: ein System aus einem Roboter und einer externen Recheneinrichtung gemäß einer dritten Ausführungsform.

### Beschreibung der Ausführungsformen

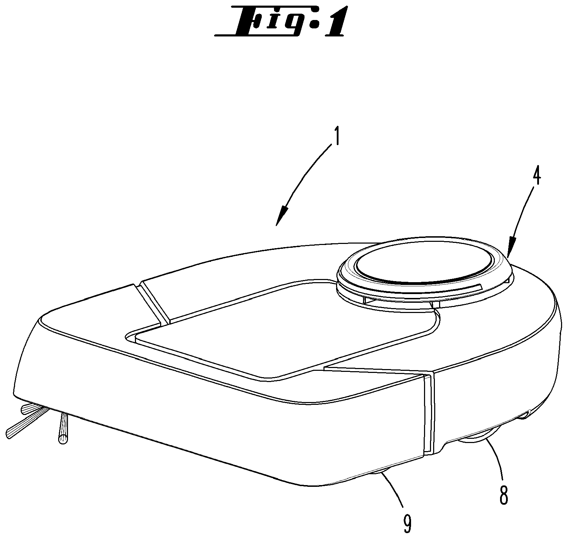

Figur 1 zeigt einen Roboter 1, welcher hier als sich selbsttätig fortbewegender Saugroboter ausgebildet ist. Der Roboter 1 weist ein Gehäuse auf, an welchem unterseitig, einer zu reinigenden Fläche zugewandt, elektromotorisch angetriebene Räder 8 sowie eine über die Unterkante eines Gehäusebodens hinausragende, gleichfalls elektromotorisch angetriebene Bürste 9 angeordnet sind. Weiter weist der Roboter 1 im Bereich der Bürste 9 eine nicht weiter dargestellte Saugmundöffnung auf, über welche mittels einer Motor-Gebläse-Einheit mit Sauggut beaufschlagte Luft in den Roboter 1 eingesaugt werden kann. Für die Elektroversorgung der einzelnen Elektrokomponenten des Roboters 1, wie für den Antrieb der Räder 8 und der Bürste 9 und darüber hinaus weiter vorgesehene Elektronik, weist der Roboter 1 einen nicht dargestellten, wieder aufladbaren Akkumulator auf.

Der Roboter 1 ist des Weiteren mit einem Sensor 4 ausgestattet, welcher innerhalb des Gehäuses des Roboters 1 angeordnet ist. Der Sensor 4 ist hier beispielsweise Teil einer Triangulationseinrichtung, welche Abstände zu Hindernissen 7 innerhalb einer Umgebung des Roboters 1 messen kann. Der Sensor 4 weist im Einzelnen eine Laserdiode auf, deren emittierter Lichtstrahl über eine Umlenkeinrichtung aus dem Gehäuse des Roboters 1 herausgeführt und um eine in der gezeigten Orientierung des Roboters 1 senkrechte Drehachse rotierbar ist, insbesondere mit einem Messwinkel von 360 Grad. Dadurch ist eine Rundum-Abstandsmessung möglich.

Mit Hilfe des Sensors 4 kann eine Umgebung des Roboters 1 in einer bevorzugt horizontalen Ebene vermessen werden, d. h. in einer zu der zu reinigenden Fläche parallelen Ebene. Dadurch kann der Roboter 1 unter Vermeidung einer Kollision mit Hindernissen 7 in der Umgebung bewegt werden. Die mittels des Sensors 4 aufgenommenen Messdaten, welche Abstände zu Hindernissen 7 und/ oder Wänden in der Umgebung darstellen, werden zur Erstellung einer Karte 2 der Umgebung genutzt.

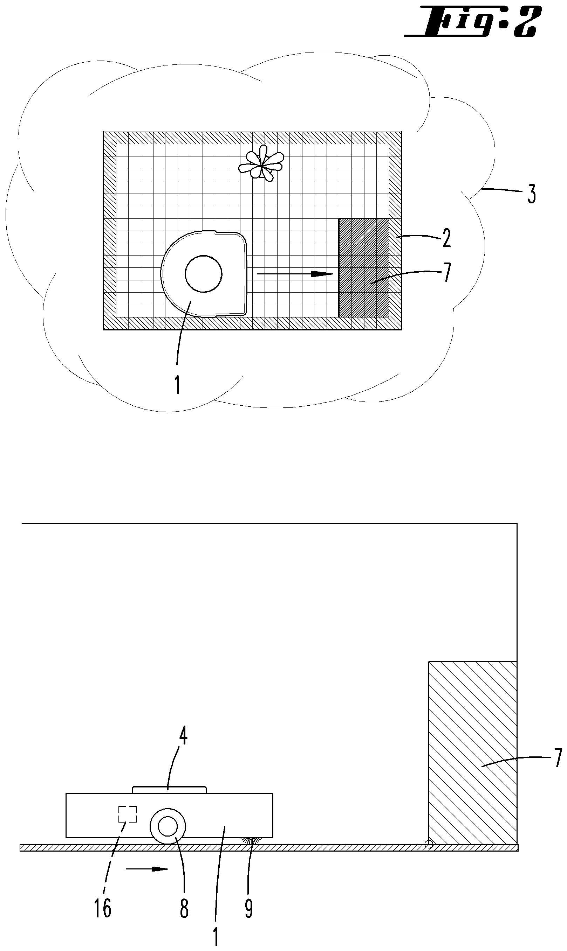

Figur 2 zeigt den Roboter 1 in einer Umgebung mit einem Hindernis 7, welches hier in Verfahrrichtung des Roboters 1 vor dem Roboter 1 angeordnet ist. Der Roboter 1 steht in Kommunikationsverbindung mit einer externen Recheneinrichtung 3, welche hier ein Cloudserver ist. Alternativ könnte diese externe Recheneinrichtung 3 jedoch beispielsweise auch ein mobiles Kommunikationsgerät, insbesondere ein Mobiltelefon oder dergleichen, sein. Die externe Recheneinrichtung 3 weist in einem Speicher die Karte 2 der Umgebung des Roboters 1 auf. In dieser Karte 2 ist sowohl die Position des Hindernisses 7 als auch die aktuelle Position und Orientierung des Roboters 1 eingezeichnet. Zur Erstellung dieser Karte 2 kann entweder eine Onboard-Recheneinrichtung 16 des Roboters 1 oder die externe Recheneinrichtung 3 verwendet werden.

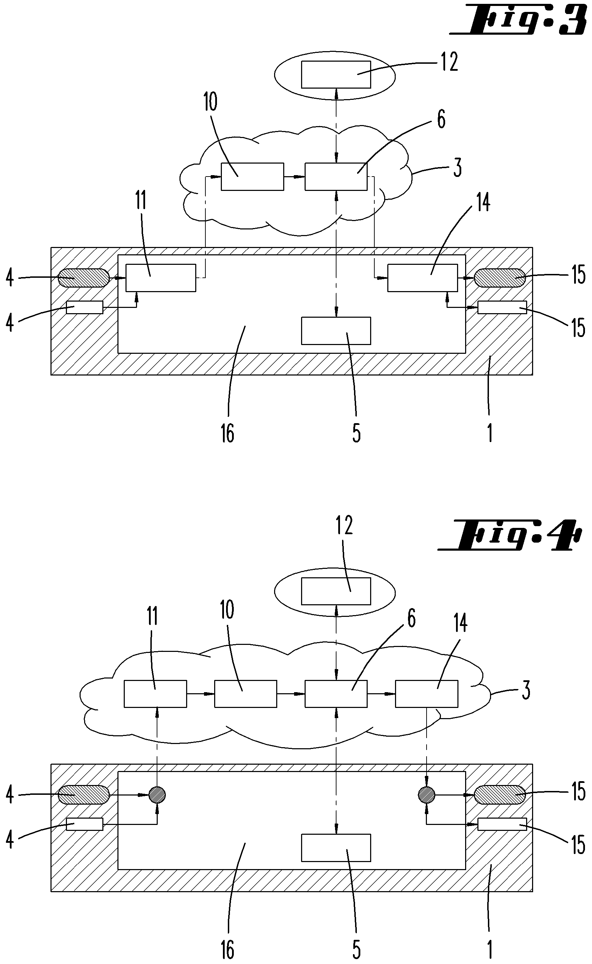

Grundsätzlich sind zur Navigation des Roboters 1 innerhalb der Umgebung und damit auch zur Vermeidung von Hindernissen 7 mehrere Berechnungsschritte notwendig. Zum einen muss zunächst die Karte 2 aus den Messdaten des Sensors 4, sowie gegebenenfalls Messdaten weiterer Sensoren 4, wie beispielsweise eines Odometrie-Sensors und/ oder Kontaktsensors, erstellt werden, was entweder innerhalb des Roboters 1 oder innerhalb der externen Recheneinrichtung 3 geschieht. Auf der Basis der Karte 2 und einer damit ebenfalls bekannten aktuellen Position des Roboters 1 innerhalb der Umgebung wird dann - wie nachfolgend noch mit Bezug zu den Figuren 3 bis 5 näher beschrieben wird - mittels einer Verhaltensdeterminationseinrichtung 6 der externen Recheneinrichtung 3 eine Verhaltensweise des Roboters 1 errechnet, welche als Grundlage für einen Steuerbefehl des Roboters 1 dient. Eine solche gewünschte Verhaltensweise des Roboters 1 ist hier beispielsweise das Beenden einer Geradeausfahrt des Roboters 1, welche direkt auf das Hindernis 7 zuführen würde, und das Einleiten einer Vermeidung des Hindernisses 7 mittels einer Kurvenfahrt. Diese errechnete Verhaltensweise, welche der Vermeidung des Hindernisses 7 dient, wird dann an eine Befehlseinrichtung 14 übermittelt, welche einen Steuerbefehl generiert, der geeignet ist den Roboter 1 an dem Hindernis 7 vorbei zu navigieren. Diese Befehlseinrichtung 14 kann entweder der externen Recheneinrichtung 3 oder dem Roboter 1 zugeordnet sein. Der von der Befehlseinrichtung 14 ausgegebene Steuerbefehl dient dann beispielsweise zur Ansteuerung eines Motors 15 einer Antriebseinrichtung der Räder 8 derart, dass der Roboter 1 bezogen auf die Darstellung in Figur 2 links an dem Hindernis 2 vorbeifährt.

Gemäß der Erfindung sind nun eine Vielzahl unterschiedlicher Ausführungsformen des Roboters 1 und der externen Recheneinrichtung 3 sowie unterschiedliche Verfahrensführungen für diese denkbar. Die Figuren 3 bis 5 zeigen exemplarisch einige der möglichen Varianten, wobei die gezeigten Darstellungen in keinem Fall abschließend zu verstehen sind, sondern weitere Kombinationen oder Unterformen möglich sind.

Die in Figur 3 gezeigte erste Ausführungsform beinhaltet einen Roboter 1, welcher unter anderem mehrere Sensoren 4 und mehrere Motoren 15 zum Antrieb der Räder 8 aufweist. Der Roboter 1 verfügt des Weiteren über eine Onboard-Recheneinrichtung 16, welche im Einzelnen eine Sensordatenaufbereitungseinrichtung 11, eine Befehlseinrichtung 14 und eine Nutzerschnittstelle 5 aufweist. Die Nutzerschnittstelle 5 ist hier beispielsweise ein Touchscreen, welches einem Nutzer einen Zustand des Roboters 1 anzeigt und die Möglichkeit zur Interaktion über eine Eingabefunktion bietet. Die externe Recheneinrichtung 3 weist eine Kartierungseinrichtung 10 und eine Verhaltensdeterminationseinrichtung 6 auf. Die Verhaltensdeterminationseinrichtung 6 weist eine Kommunikationsverbindung zu einer Nutzerschnittstelle 12 auf, welche hier durch ein weiteres externes Gerät zur Verfügung gestellt wird, beispielsweise durch ein mobiles Kommunikationsgerät, wie ein Mobiltelefon. Über diese Nutzerschnittstelle 12 kann ein Nutzer direkt Einfluss auf die Verhaltensweise des Roboters 1 nehmen, beispielsweise indem eine Zustandsänderung des Roboters 1 von "Ruhend" auf "Reinigung einer Fläche" veranlasst wird.

Das Verfahren zum Betrieb des Roboters 1 funktioniert gemäß dieser Ausführungsform so, dass die Sensoren 4 des Roboters 1 während einer Reinigungsfahrt des Roboters 1 kontinuierlich Messdaten innerhalb der Umgebung aufnehmen. Diese Messdaten weisen wie zuvor dargestellt vorzugsweise Abstandswerte zu Hindernissen 7 sowie Odometriedaten auf. Die Sensoren 4 übermitteln die Messdaten an die Sensordatenaufbereitungseinrichtung 11 des Roboters 1, mittels welcher die Messdaten auf Vollständigkeit geprüft, von analogen in digitale Daten konvertiert und skaliert werden. Die Sensordatenaufbereitungseinrichtung 11 übermittelt die aufbereiteten Messdaten an die externe Recheneinrichtung 3. Die Kommunikation erfolgt hier beispielsweise über ein WLAN-Netz, in welches der Roboter 1 eingebunden ist, und welches über das Internet eine Kommunikationsverbindung zu der externen Recheneinrichtung 3 aufweist. Die Messdaten werden mittels der Kartierungseinrichtung 10 der externen Recheneinrichtung 3 zu einer Karte 2 der Umgebung verarbeitet, beispielsweise mittels eines sogenannten SLAM-Verfahrens (Simultaneous Localisation and Measurement), wobei die erstellte Karte 2 gleichzeitig auch die aktuelle Position des Roboters 1 in der Umgebung enthält. Die Verhaltensdeterminationseinrichtung 6 der externen Recheneinrichtung 3 greift auf die erstellte Karte 2 zu und ermittelt aus der Karte 2, der aktuellen Position des Roboters 1 innerhalb der Umgebung und gegebenenfalls einer Nutzereingabe, die ein Nutzer über die Nutzerschnittstelle 12 direkt an die Verhaltensdeterminationseinrichtung 6 übergeben hat, eine geeignete Verhaltensweise des Roboters 1, welche als Grundlage für einen Steuerbefehl dient. Im vorgenannten Fall erkennt die Verhaltensdeterminationseinrichtung 6, dass sich ein Hindernis 7 innerhalb des aktuellen Verfahrweges des Roboters 1 befindet, so dass es in Kürze zu einer Kollision mit dem Hindernis 7 käme. Bei den anschließenden Berechnungen mittels geeigneter Planungs- und Entscheidungsalgorithmen bestimmt die Verhaltensdeterminationseinrichtung 6 dann eine geeignete Verhaltensweise des Roboters 1. Die determinierte Verhaltensweise ist hier beispielsweise "Hindernis 7 vermeiden". Die Verhaltensdeterminationseinrichtung 6 übermittelt diese determinierte Verhaltensweise an die Befehlseinrichtung 14 des Roboters 1, welche darauf hin mehrere Steuerbefehle generiert, die zur Ansteuerung der Motoren 15 in der Art dienen, dass der Roboter 1 das Hindernis 7 vermeiden kann. Insgesamt ergibt sich durch die Auslagerung der Kartenerstellung und der Verhaltensdetermination in die externe Recheneinrichtung 3 eine Reduzierung der Rechen- und Speicherkapazitäten der Onboard-Recheneinrichtung 16 des Roboters 1.

Figur 4 zeigt eine zweite Ausführungsform der Erfindung, bei welcher die Onboard-Recheneinrichtung 16 des Roboters 1 nur noch eine Nutzerschnittstelle 5 aufweist. Alle Einrichtungen zur Verarbeitung von navigationsrelevanten Daten sind in die externe Recheneinrichtung 3 ausgelagert. Im Einzelnen verfügt die externe Recheneinrichtung 3 nun über eine Sensordatenaufbereitungseinrichtung 11, eine Kartierungseinrichtung 10, eine Verhaltensdeterminationseinrichtung 6 und eine Befehlseinrichtung 14. Die Sensoren 4 des Roboters 1 übermitteln ihre Messdaten nun direkt an die Sensordatenaufbereitungseinrichtung 11 der externen Recheneinrichtung 3. Dort werden die Messdaten wie zuvor erläutert aufbereitet und an die Kartierungseinrichtung 10 übermittelt, welche daraufhin wieder eine Karte 2 der Umgebung inklusive einer aktuellen Position des Roboters 1 erstellt. Die Verhaltensdeterminationseinrichtung 6 greift auf die Karte 2 zu und determiniert aus der aktuellen Verfahrsituation des Roboters 1, d. h. in Abhängigkeit von der Position des Roboters 1 und gegebenenfalls in dem Verfahrweg vorhandenen Hindernissen 7, eine Verhaltensweise des Roboters 1, welche hier zu einer gewünschten Vermeidung des Hindernisses 7 führt. Die determinierte Verhaltensweise wird an die Befehlseinrichtung 14 übermittelt, welche ebenfalls in der externen Recheneinrichtung 3 vorhanden ist. Diese erstellt Steuerbefehle, welche zur Vermeidung des Hindernisses 7 geeignet sind und übermittelt diese an die Motoren 15 des Roboters 1, ohne dass weitere Berechnungen innerhalb der Onboard-Recheneinrichtung 16 des Roboters 1 notwendig sind. Die Onboard-Recheneinrichtung 16 dient in diesem Fall nur noch zur Weiterleitung der Steuerbefehle an die Motoren 15, welche daraufhin die Räder 8 des Roboters 1 derart antreiben, dass sich in dem gezeigten Beispiel ein kollisionsfreier Verfahrweg an dem Hindernis 7 vorbei ergibt.

Gemäß dieser Ausführungsform sind die benötigten Ressourcen des Roboters 1 für Berechnungen und Speicherkapazität gegenüber der Ausführungsform gemäß Figur 3 weiter reduziert.

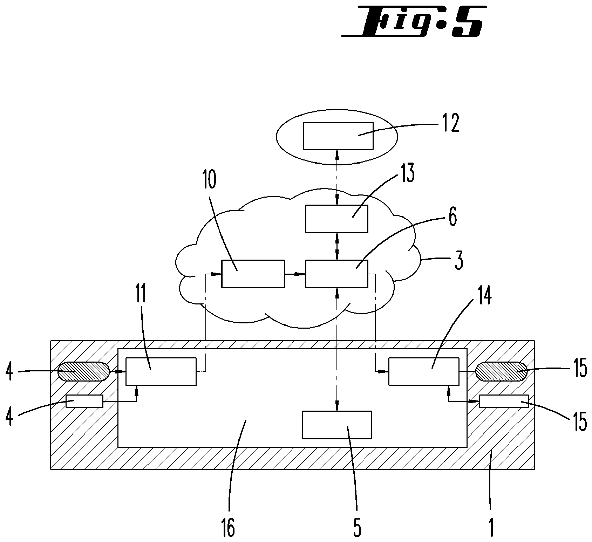

Figur 5 zeigt schließlich eine dritte Ausführungsform der Erfindung, bei welcher der Roboter 1 identisch zu der ersten Ausführungsform gemäß Figur 3 ausgestaltet ist. Die Onboard-Recheneinrichtung 16 des Roboters 1 weist eine Sensordatenaufbereitungseinrichtung 11, eine Nutzerschnittstelle 5 und eine Befehlseinrichtung 14 auf. Die externe Recheneinrichtung 3 verfügt hier - neben einer Kartierungseinrichtung 10 und einer Verhaltensdeterminationseinrichtung 6 - zusätzlich über eine Kartenaufbereitungseinrichtung 13, welche in Kommunikationsverbindung einerseits mit der Verhaltensdeterminationseinrichtung 6 und andererseits der Nutzerschnittstelle 12 steht, welche hier als Mobiltelefon ausgebildet ist. Die Kartenaufbereitungseinrichtung 13 dient zur Aufbereitung der von der Kartierungseinrichtung 10 erstellten Karte derart, dass zum einen eine von der Verhaltensdeterminationseinrichtung 6 bestimmte Verhaltensweise vermerkt wird, und zum anderen eine grafische Darstellung der Karte 2 so aufbereitet ist, dass sich ein Nutzer des Roboters 1 ohne große gedankliche Transferleistung innerhalb der Karte 2 orientieren kann und zudem erkennt, welche Verhaltensweise der Roboter 1 derzeit verfolgt. Hier in diesem Fall kann beispielsweise in der auf der Nutzerschnittstelle 12 angezeigten Karte 2 ein Hinweis darauf erfolgen, dass der Roboter 1 aktuell eine Hindernisvermeidung ausführt, um das Hindernis 7 zu umfahren.

Neben den in den Figuren dargestellten Ausführungsformen sind selbstverständlich auch weitere Ausführungsformen denkbar, wobei alle gemein haben, dass die Verhaltensweise des Roboters 1, welche Grundlage für einen Steuerbefehl ist, innerhalb der externen Recheneinrichtung 3 berechnet wird.

### Liste der Bezugszeichen

- 1: Roboter
- 2: Karte
- 3: Externe Recheneinrichtung
- 4: Sensor
- 5: Nutzerschnittstelle
- 6: Verhaltensdeterminationseinrichtung
- 7: Hindernis
- 8: Rad
- 9: Bürste
- 10: Kartierungseinrichtung
- 11: Sensordatenaufbereitungseinrichtung
- 12: Nutzerschnittstelle
- 13: Kartenaufbereitungseinrichtung
- 14: Befehlseinrichtung
- 15: Motor
- 16: Onboard-Recheneinrichtung

## Patentansprüche

1. Verfahren zum Betrieb eines sich selbsttätig fortbewegenden Roboters (1), wobei Messdaten der Umgebung mithilfe mehrerer Sensoren (4) aufgenommen werden, wobei eine Karte (2) einer Umgebung des Roboters (1) anhand der innerhalb der Umgebung aufgenommenen Messdaten erstellt wird, wobei anhand der erstellten Karte (2), einer aktuellen Position des Roboters (1) innerhalb der Umgebung und einer determinierten Verhaltensweise, nämlich Verfahrstrategie, des Roboters ein Steuerbefehl generiert wird, wobei sich der Roboter (1) anhand des generierten Steuerbefehls fortbewegt, und wobei für eine Navigation des Roboters (1) relevante Daten zumindest teilweise zur Verarbeitung an eine separat zu dem Roboter (1) ausgebildete externe Recheneinrichtung (3) übermittelt werden, **dadurch gekennzeichnet, dass** die externe Recheneinrichtung (3) basierend auf der Karte (2) und der aktuellen Position des Roboters (1) die Verhaltensweise des Roboters (1) als Grundlage für den Steuerbefehl determiniert, wobei eine Verhaltensdeterminationseinrichtung (6) der externen Recheneinrichtung (3) entscheidet, wann ein Zustand des Roboters (1) und/oder ein aktuell von dem Roboter (1) gezeigtes Verhalten geändert werden muss, wobei die Verhaltensdeterminationseinrichtung (6) auf die Karte (2) zugreift und aus einer aktuellen Verfahrsituation des Roboters (1), nämlich in Abhängigkeit von der Position des Roboters (1) und einem in dem Verfahrweg vorhandenen Hindernis (7), eine Verhaltensweise des Roboters (1), welche zu einer gewünschten Vermeidung des Hindernisses (7) führt, determiniert, und wobei die externe Recheneinrichtung (3) eine Information über die determinierte Verhaltensweise an den Roboter (1) übermittelt und der Roboter (1) anhand der determinierten Verhaltensweise einen Steuerbefehl generiert, der zur Ansteuerung eines Motors (15) des Roboters (1) in der Art dient, dass der Roboter (1) das Hindernis (7) vermeidet, wobei die externe Recheneinrichtung (3) die Karte (2) der Umgebung erstellt und wobei Messdaten der Umgebung an die externe Recheneinrichtung (3) übermittelt werden, und die externe Recheneinrichtung (3) die übermittelten Messdaten auf Vollständigkeit prüft, indem sichergestellt wird, dass die Messdaten aller verfügbaren Sensoren (4) ausgelesen werden.

2. Verfahren nach Anspruch 1, **dadurch gekennzeichnet, dass** der Roboter (1) Messdaten der Umgebung mithilfe zumindest eines Sensors (4) aufnimmt und diese Messdaten zur Erstellung der Karte (2) an die externe Recheneinrichtung (3) übermittelt.

3. Verfahren nach einem der vorhergehenden Ansprüche, **dadurch gekennzeichnet, dass** die Messdaten zur Erstellung der Karte (2) durch Abstandsmessung und/ oder Odometrie und/oder Kollisionsdetektion aufgenommen werden.

4. Verfahren nach einem der vorhergehenden Ansprüche, **dadurch gekennzeichnet, dass** die navigationsrelevanten Daten auf einem Cloudserver und/oder einem mobilen Kommunikationsgerät und/ oder einem über ein WLAN mit dem Roboter verbundenen Gerät und/oder einem WLAN-Router als externer Recheneinrichtung (3) verarbeitet werden.

5. Verfahren nach einem der vorhergehenden Ansprüche, **dadurch gekennzeichnet, dass** ein Nutzer des Roboters (1) eine Eingabe für die externe Recheneinrichtung (3) mittels einer mit der externen Recheneinrichtung (3) in Kommunikationsverbindung stehenden Eingabeeinrichtung (5), insbesondere mittels eines mobilen Kommunikationsgerätes, tätigt.

6. System aus einem sich selbsttätig fortbewegenden Roboter (1), einer mit dem Roboter (1) in Kommunikationsverbindung stehenden und separat zu dem Roboter (1) ausgebildeten externen Recheneinrichtung (3) und mehreren Sensoren (4) zur Aufnahme von Messdaten innerhalb einer Umgebung des Roboters (1), wobei der Roboter (1) eine Einrichtung zur Navigation des Roboters (1) innerhalb der Umgebung aufweist, wobei die externe Recheneinrichtung (3) eingerichtet ist, für eine Navigation des Roboters (1) relevante Daten zu verarbeiten, **dadurch gekennzeichnet, dass** die externe Recheneinrichtung (3) eine Verhaltensdeterminationseinrichtung (6) aufweist, welche eingerichtet ist, anhand einer erstellten Karte (2) der Umgebung und einer aktuellen Position des Roboters (1) eine Verhaltensweise, nämlich Verfahrstrategie, des Roboters (1) als Grundlage für einen Steuerbefehl zur Steuerung des Roboters (1) zu determinieren, wobei die Verhaltensdeterminationseinrichtung (6) entscheidet, wann ein Zustand des Roboters (1) und/ oder ein aktuell von dem Roboter (1) gezeigtes Verhalten geändert werden muss, wobei die Verhaltensdeterminationseinrichtung (6) auf die Karte (2) zugreift und aus einer aktuellen Verfahrsituation des Roboters (1), nämlich in Abhängigkeit von der Position des Roboters (1) und einem in dem Verfahrweg vorhandenen Hindernis (7), eine Verhaltensweise des Roboters (1), welche zu einer gewünschten Vermeidung des Hindernisses (7) führt, determiniert, und wobei die externe Recheneinrichtung (3) eingerichtet ist, eine Information über die determinierte Verhaltensweise an den Roboter (1) zu übermitteln, wobei der Roboter (1) eingerichtet ist, anhand der determinierten Verhaltensweise einen Steuerbefehl zu generieren, der zur Ansteuerung eines Motors (15) des Roboters (1) in der Art dient, dass der Roboter (1) das Hindernis (7) vermeidet, wobei die externe Recheneinrichtung (3) eingerichtet ist, die Karte (2) der Umgebung zu erstellen und von den Sensoren (4) übermittelte Messdaten auf Vollständigkeit zu prüfen, indem sichergestellt wird, dass die Messdaten aller verfügbaren Sensoren (4) ausgelesen werden.

## Claims

1. Method for operating a self-propelling robot (1), with measurement data of the surroundings being captured by means of a plurality of sensors (4), a map (2) of the surroundings of the robot (1) being created on the basis of the measurement data captured within the surroundings, a control command being generated on the basis of the created map (2), on the basis of a current position of the robot (1) within the surroundings and on the basis of a determined behaviour, namely a travel strategy, of the robot, the robot (1) propelling itself on the basis of the generated control command, and data relevant for navigating the robot (1) being transmitted, at least in part, to an external computing device (3) for processing, which device is separate from the robot (1), **characterised in that** the external computing device (3) determines the behaviour of the robot (1) as a basis for the control command based on the map (2) and the current position of the robot (1), a behaviour determination device (6) of the external computing device (3) deciding when a state of the robot (1) and/or a behaviour currently displayed by the robot (1) needs to be changed, the behaviour determination device (6) accessing the map (2) and using a current travel situation of the robot (1), namely on the basis of the position of the robot (1) and an obstacle (7) which is present in the travel path, to determine a behaviour of the robot (1), which behaviour leads to a desired avoidance of the obstacle (7), and the external computing device (3) transmitting information about the determined behaviour to the robot (1) and the robot (1) generating a control command on the basis of the determined behaviour, which command is used to control a motor (15) of the robot (1) in such a way that the robot (1) avoids the obstacle (7), the external computing device (3) creating the map (2) of the surroundings and measurement data of the surroundings being transmitted to the external computing device (3), and the external computing device (3) checking the transmitted measurement data for completeness by ensuring that the measurement data of all available sensors (4) are read out.

2. Method according to claim 1, **characterised in that** the robot (1) captures measurement data of the surroundings using at least one sensor (4) and transmits these measurement data to the external computing device (3) to create the map (2).

3. Method according to either of the preceding claims, **characterised in that** the measurement data for creating the map (2) are captured by distance measurement and/or odometry and/or collision detection.

4. Method according to any of the preceding claims, **characterised in that** the navigation-relevant data are processed on a cloud server and/or a mobile communication device and/or a device connected to the robot via a WLAN and/or a WLAN router as an external computing device (3).

5. Method according to any of the preceding claims, **characterised in that** a user of the robot (1) provides an input for the external computing device (3) by means of an input device (5) which is in communication with the external computing device (3), in particular by means of a mobile communication device.

6. System consisting of a self-propelling robot (1), an external computing device (3) which is in communication with the robot (1) and is separate from the robot (1), and a plurality of sensors (4) for capturing measurement data within the surroundings of the robot (1), the robot (1) having a device for navigating the robot (1) within the surroundings, the external computing device (3) being configured to process data relevant for navigating the robot (1), **characterised in that** the external computing device (3) has a behaviour determination device (6) which is configured to use a created map (2) of the surroundings and a current position of the robot (1) to determine a behaviour, namely a travel strategy, of the robot (1) as the basis for a control command for controlling the robot (1), the behaviour determination device (6) deciding when a state of the robot (1) and/or a behaviour currently displayed by the robot (1) needs to be changed, the behaviour determination device (6) accessing the map (2) and using a current travel situation of the robot (1), namely on the basis of the position of the robot (1) and an obstacle (7) which is present in the travel path, to determine a behaviour of the robot (1), which behaviour leads to a desired avoidance of the obstacle (7), and the external computing device (3) being configured to transmit information about the determined behaviour to the robot (1), the robot (1) being configured to generate a control command on the basis of the determined behaviour, which command is used to control a motor (15) of the robot (1) in such a way that the robot (1) avoids the obstacle (7), the external computing device (3) being configured to create the map (2) of the surroundings and to check the measurement data transmitted by the sensors (4) for completeness by ensuring that the measurement data from all available sensors (4) are read out.

## Revendications

1. Procédé de fonctionnement d'un robot (1) se déplaçant automatiquement, dans lequel des données de mesure de l'environnement sont enregistrées à l'aide de plusieurs capteurs (4), dans lequel une carte (2) d'un environnement du robot (1) est établie à l'aide des données de mesure enregistrées à l'intérieur de l'environnement, dans lequel une instruction de commande est générée à l'aide de la carte établie (2), d'une position actuelle du robot (1) à l'intérieur de l'environnement et d'un comportement déterminé du robot, à savoir une stratégie de déplacement, dans lequel le robot (1) se déplace à l'aide de l'instruction de commande générée, et dans lequel des données pertinentes pour une navigation du robot (1) sont transmises au moins en partie pour traitement à un dispositif de calcul externe (3) formé séparément du robot (1), **caractérisé en ce que** le dispositif de calcul externe (3) détermine, sur la base de la carte (2) et de la position actuelle du robot (1), le comportement du robot (1) comme base pour l'instruction de commande, un dispositif de détermination de comportement (6) du dispositif de calcul externe (3) décidant quand un état du robot (1) et/ou un comportement actuellement présenté par le robot (1) doit être modifié, le dispositif de détermination de comportement (6) accédant à la carte (2) et déterminant à partir d'une situation de déplacement actuelle du robot (1), à savoir en fonction de la position du robot (1) et d'un obstacle (7) présent sur le trajet de déplacement, un comportement du robot (1) qui conduit à un évitement souhaité de l'obstacle (7), et dans lequel le dispositif de calcul externe (3) transmet au robot (1) une information sur le comportement déterminé et le robot (1) génère, à l'aide du comportement déterminé, une instruction de commande qui sert à commander un moteur (15) du robot (1) de telle manière que le robot (1) évite l'obstacle (7), dans lequel le dispositif de calcul externe (3) établit la carte (2) de l'environnement et dans lequel des données de mesure de l'environnement sont transmises au dispositif de calcul externe (3), et le dispositif de calcul externe (3) vérifie l'exhaustivité des données de mesure transmises en s'assurant que les données de mesure de tous les capteurs (4) disponibles sont lues.

2. Procédé selon la revendication 1, **caractérisé en ce que** le robot (1) enregistre des données de mesure de l'environnement à l'aide d'au moins un capteur (4) et transmet ces données de mesure au dispositif de calcul externe (3) pour établir la carte (2).

3. Procédé selon l'une des revendications précédentes, **caractérisé en ce que** les données de mesure pour l'établissement de la carte (2) sont enregistrées par mesure de distance et/ou par odométrie et/ou par détection de collision.

4. Procédé selon l'une des revendications précédentes, **caractérisé en ce que** les données pertinentes pour la navigation sont traitées sur un serveur Cloud et/ou un appareil de communication mobile et/ou un appareil relié au robot par un WLAN et/ou un routeur WLAN en tant que dispositif de calcul externe (3).

5. Procédé selon l'une des revendications précédentes, **caractérisé en ce qu'**un utilisateur du robot (1) effectue une entrée pour le dispositif de calcul externe (3) au moyen d'un dispositif d'entrée (5) en liaison de communication avec le dispositif de calcul externe (3), en particulier au moyen d'un appareil de communication mobile.

6. Système composé d'un robot (1) se déplaçant automatiquement, d'un dispositif de calcul externe (3) en liaison de communication avec le robot (1) et conçu séparément du robot (1), et de plusieurs capteurs (4) destinés à enregistrer des données de mesure à l'intérieur d'un environnement du robot (1), le robot (1) présentant un dispositif de navigation du robot (1) à l'intérieur de l'environnement, le dispositif de calcul externe (3) étant conçu pour traiter des données pertinentes pour une navigation du robot (1), **caractérisé en ce que** le dispositif de calcul externe (3) présente un dispositif de détermination de comportement (6) qui est conçu pour déterminer, à l'aide d'une carte (2) établie de l'environnement et d'une position actuelle du robot (1), un comportement du robot (1), à savoir une stratégie de déplacement, comme base pour une instruction de commande pour la commande du robot (1), dans lequel le dispositif de détermination de comportement (6) décide quand un état du robot (1) et/ou un comportement actuellement présenté par le robot (1) doit être modifié, dans lequel le dispositif de détermination de comportement (6) accède à la carte (2) et détermine, à partir d'une situation de déplacement actuelle du robot (1), à savoir en fonction de la position du robot (1) et d'un obstacle (7) présent sur le trajet de déplacement, un comportement du robot (1) qui conduit à un évitement souhaité de l'obstacle (7), et dans lequel le dispositif de calcul externe (3) est conçu pour transmettre au robot (1) une information sur le comportement déterminé, le robot (1) étant conçu pour générer à l'aide du comportement déterminé une instruction de commande qui sert à commander un moteur (15) du robot (1) de telle manière que le robot (1) évite l'obstacle (7), dans lequel le dispositif de calcul externe (3) est configuré pour établir la carte (2) de l'environnement et pour vérifier l'exhaustivité des données de mesure transmises par les capteurs (4) en s'assurant que les données de mesure de tous les capteurs (4) disponibles sont lues.
